# EUROPEAN PATENT APPLICATION

(11) **EP 1 976 167 A1**
(43) Date of publication of application: **01.10.2008**
(21) Application number: 07706557.1
(22) Date of filing: 11.01.2007
(51) Int. Cl.: H04J 11/00, H04B 1/707, H04Q 7/36

(54) **TRANSMISSION DEVICE, RECEPTION DEVICE, AND COMMUNICATION METHOD**

(30) Priority: 18.01.2006 JP 2006010499; 08.02.2006 JP 2006031743; 01.05.2006 JP 2006127991
(71) Applicant: NTT DoCoMo, Inc., Chiyoda-ku Tokyo 100-6150 (JP)
(72) Inventor: TANNO, Motohiro, Tokyo 100-6150 (JP); HIGUCHI, Kenichi, Tokyo 100-6150 (JP); SAWAHASHI, Mamoru, Tokyo 100-6150 (JP); ISHII, Minami, Tokyo 100-6150 (JP); MIKI, Nobuhiko, Tokyo 100-6150 (JP); KISHIYAMA, Yoshihisa, Tokyo 100-6150 (JP)
(74) Representative: HOFFMANN EITLE
(86) International application number: PCT/JP2007/050210
(87) International publication number: WO 2007/083555

(57) **Abstract**

A disclosed transmitter includes a system information generation unit generating system information; a multiplexing unit multiplexing a system information item in the system information required for cell search into a broadcast channel and multiplexing a system information item in the system information other than the system information item required for cell search into a channel different from the broadcast channel; and a transmission unit transmitting the broadcast channel and the channel different from the broadcast channel.

## Description

### TECHNICAL FIELD

The present invention relates transmitters, receivers and communication methods for communicating in accordance with OFDM scheme.

### BACKGROUND ART

In multicarrier transmission schemes such as MC-CDMA (Multi Carrier Code Division Multiple Access) or OFDM (Orthogonal Frequency Division Multiplexing) modulation scheme, at the transmitter side, an information signal is modulated in multiple subcarriers and guard intervals are inserted in transmitted signals to reduce waveform distortion caused by multipath delay waves.

As one method of detecting FFT timings in multicarrier transmission schemes based on the OFDM modulation scheme, a method of detecting FFT timings by correlating guard intervals inserted for each symbol is known. In addition, one method of detecting FFT timings by transmitting an identical signal as the timing detection signal twice repeatedly and deriving correlation between two symbols at the receiver side is known.

Also, a transmitter has been proposed for multiplexing and transmitting synchronization signals at certain timings, as disclosed in patent document 1 below. In this transmitter, the synchronization signals are transmitted in a burst manner over all subcarriers. For example, if start time of a single spread (scramble) code pattern is made concurrent with the transmission timing of the synchronization signal in the transmitter, the synchronization signal is transmitted twice during an iteration time period τ of the single spread code pattern.

Patent document 1: JP 2003-152681

Non-patent document 1: S. M. Alamouti, "A simple transmit diversity technique for wireless communications", IEEE J. Select. Areas Commun., vol. 16, no. 8, pp. 1451-1458, October 1998

Non-patent document 2: K. Suto, T. Ohtsuki, "Performance evaluation of space-time-frequency block codes over frequency selective fading channels", IEEE VTC2002-Fall, pp. 1466-1470, Sept. 2002

Non-patent document 3: 3GPP TS25.211 Physical channels and mapping of transport channels onto physical channels (FDD)

Non-patent document 4: CDD (Cyclic Delay Diversity): Armin Dammann and Stefan Kaiser, "Standard conformable antenna diversity techniques for OFDM and its application to the DVB-T system", GLOBECOM 2001, pp. 3100-3105, November 2001

Non-patent document 5: D. Chase, "Code combining - a maximum-likelihood decoding approach for combining an arbitrary number of noisy packets", IEEE Trans. Commun., Vol. 33, no. 5, pp. 385-393, May 1985

Non-patent document 6: D. Rowitch and L. Milstein, "on the performance of Hybrid FEC/ARQ Systems Using Rate Compatible Punctured Turbo (RCPT) Codes", IEEE Trans. on Commun., vol. 48, no. 6, June 2000

### DISCLOSURE OF INVENTION

### [PROBLEM TO BE SOLVED BY THE INVENTION]

However, there are some problems in the above-mentioned background technique as presented below.

In the above-mentioned transmitter, various system information items, such as information associated with downlink control channel configuration, peripheral cell information and other regulation information, are transmitted in broadcast channels (BCHs). In general, system information transmitted in BCHs is always transmitted in a constant period, resulting in overhead, and thus the transmission rate of BCHs is set to be low. As a result, it takes a longer time to receive the broadcast channels for obtaining the system information, resulting in a longer cell search time, that is, the amount of time required to detect cells and obtain the system information of the cells, at mobile stations.

In addition, a significant amount of processing is required for the cell search at the mobile stations.

Furthermore, the significant amount of the system information transmitted in BCH may lead to increased overhead in the system.

Thus, the present invention is directed to overcome the above-mentioned problems and aims at providing a transmitter, a receiver and a communication method for reducing the processing amount in the cell search, the cell search time and the system overhead.

### [MEANS FOR SOLVING THE PROBLEM]

In order to overcome the above-mentioned problems, one feature of the present invention relates to a transmitter including: a system information generation unit generating system information; a multiplexing unit multiplexing a system information item in the system information required for cell search in a broadcast channel and multiplexing a system information item into the system information other than the system information item required for cell search into a channel different from the broadcast channel; and a transmission unit transmitting the broadcast channel and the channel different from the broadcast channel.

According to the transmitter, cell search time can be reduced in mobile stations. Here, the cell search time includes reception time of a broadcast channel. Also, it is possible to reduce the processing amount of cell search.

Further, another feature of the present invention relates to a receiver including: a broadcast channel reception unit receiving a broadcast channel transmitted from a base station; an extraction unit performing cell search based on the broadcast channel and extracting information indicative of a channel different from the broadcast channel, the channel for transmitting a system information item other than a system information item required for the cell search; and a reception unit receiving the channel different from the broadcast channel based on the information indicative of the channel different from the broadcast channel, the channel for transmitting the system information item other than the system information item required for the cell search.

According to the receiver, cell search time can be reduced. Here, the cell search time includes reception time of a broadcast channel. Also, it is possible to reduce the processing amount of cell search.

Still further, another feature of the present invention relates to a communication method including the steps of: generating system information; multiplexing a system information item in the system information required for cell search into a broadcast channel; and transmitting the broadcast channel.

According to the communication method, cell search time can be reduced in mobile stations. Here, the cell search time includes reception time of a broadcast channel. Also, it is possible to reduce the processing amount of cell search.

### [ADVANTAGE OF THE INVENTION]

According to the embodiments of the present invention, a transmitter, a receiver and a communication method that can reduce the processing amount in the cell search, the cell search time and the system overhead are achieved

### BRIEF DESCRIPTION OF DRAWINGS

FIG. 1 is a partial block diagram illustrating a transmitter according to one embodiment of the present invention;
FIG. 2 is a schematic diagram illustrating transmission bandwidth of a broadcast channel and a synchronization channel;
FIG. 3A is a partial block diagram illustrating a transmitter according to one embodiment of the present invention;
FIG. 3B is a partial block diagram illustrating a transmitter according to one embodiment of the present invention;
FIG. 4 is a schematic diagram illustrating transmission bandwidth of shared data channels over which a paging indicator channel, a paging channel and paging information are transmitted;
FIG. 5A is a schematic diagram illustrating soft-combining between sectors within one base station;
FIG. 5B is a schematic diagram illustrating soft-combining between sectors within one base station;
FIG. 6 is a schematic diagram illustrating an exemplary operation of a base station including a transmitter according to one embodiment of the present invention;
FIG. 7A is a schematic diagram illustrating radio resource blocks assigned for paging channels;
FIG. 7B is a schematic diagram illustrating transmission method of a transmitter according to one embodiment of the present invention;
FIG. 8A is a partial block diagram illustrating a receiver according to one embodiment of the present invention;
FIG. 8B is a partial block diagram illustrating a receiver according to one embodiment of the present invention;
FIG. 9 is a flow diagram illustrating an exemplary operation of a receiver according to one embodiment of the present invention;
FIG. 10 is a flow diagram illustrating an assignment timing of a user ID;
FIG. 11 is a flow diagram illustrating an assignment timing of a user ID;
FIG. 12 is a flow diagram illustrating an assignment timing of a user ID;
FIG. 13 is a partial block diagram illustrating a transmitter according to one embodiment of the present invention;
FIG. 14 is a schematic diagram illustrating a transmission method in a transmitter according to one embodiment of the present invention;
FIG. 15 is a partial block diagram illustrating a transmitter according to one embodiment of the present invention; and
FIG. 16 is a partial block diagram illustrating a receiver according to one embodiment of the present invention.

### LIST OF REFERENCE SYMBOLS

10: transmitter
20: receiver

### BEST MODE FOR CARRYING OUT THE INVENTION

Embodiments of the present invention will be described with reference to the drawings below. Throughout the drawings for illustrating the embodiments, objects having the same functions are referred to with the same reference signs, and descriptions thereof are not repeated.

A radio communication system according to one embodiment of the present invention is described. In this embodiment, the radio communication system includes a base station and a mobile station. The base station includes a transmitter 10, and the mobile station includes a receiver 20.

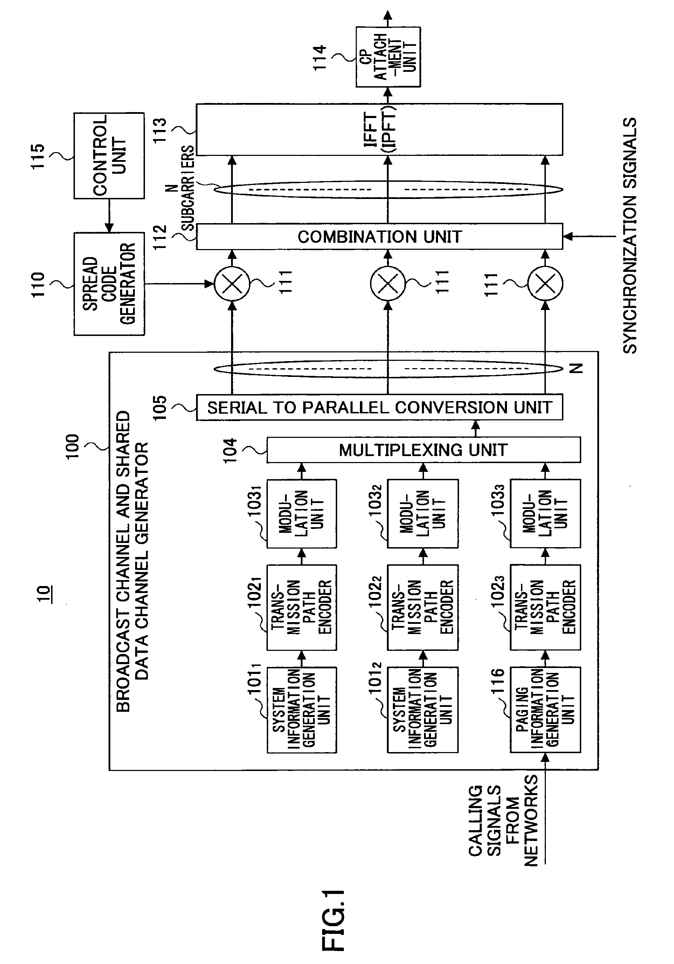

Next, the transmitter 10 according to this embodiment is described with reference to FIG. 1.

The transmitter 10 transmits broadcast channels and shared data channels. The mobile station including the receiver 20 uses the broadcast channels to perform cell search. The "cell search" used herein means some procedures before cell detection and acquisition of minimum system information. Further, the mobile station including the receiver 20 obtains various system information items by receiving the shared data channels. Then, the mobile station including the receiver 20 obtains paging information by receiving paging channels or the shared data channels.

The transmitter 10 is installed in the base station for transmitting radio signals. The transmitter 10 includes a broadcast channel and shared data channel generator 100.

Some operations as described below may be carried out in the broadcast channel and shared data channel generator 100.

The required minimum system information supplied from a system information generation unit 101₁, such as information indicative of the system bandwidth of its own base station and information indicative of shared data channels for transmitting system information items other than the required minimum system information including one or more information items, for example, information items indicative of frequency, time, cell ID, SFN (System Frame Number), network ID (information indicative of operators) and the number of transmission antennas, is encoded in a transmission path encoder 102₁ and then modulated in a modulation unit 103₁.

Also, the system information supplied from a system information generation unit 101₂ other than the required minimum system information, that is, various information items associated with mobile stations such as various timer values (cell selection timers), various parameter values (a reception level reporting cycle, an initial transmission power, etc.), location registration area information, cell selection information (a cell selection threshold for cell selection such as reception level information), uplink interference amount, positioning information (latitude and longitude information, etc.), own cell channel configuration information (paging channels other than BCH and L1/L2 control channels), core network information, UE measurement information, downlink control channel configuration information, peripheral cell information (cell IDs, system bandwidth, BCH bandwidth, the number of transmission antennas, timing information (time difference between base stations), transmission power and the number of sectors of peripheral cells) and various regulation information items, are encoded in a transmission path encoder 102₂ and then modulated in a modulation unit 103₂.

Paging indicator information and paging information generated by a paging information generation unit 116 based on calling or paging signals supplied from networks are encoded in a transmission path encoder 102₃ and then modulated in a modulation unit 103₃.

The system information, the paging indicator information and the paging information modulated are multiplexed by a multiplexing unit 104 into broadcast channels and shared data channels and serial-to-parallel converted by a serial-to-parallel conversion unit 105 into N information symbol sequences on the frequency axis. The converted N information symbol sequences are arranged on the frequency axis.

The symbol sequences having a sequence length N are multiplied by N multipliers 111 with spread codes supplied from a spread code generator 110 controlled by a control unit 115 in the frequency direction, and then the multiplied symbol sequences are supplied to a combination unit 112. The combination unit 112 multiplexes the symbol sequences with the sequence length N multiplied with the spread codes into a certain subcarrier corresponding to the synchronization signal in N subcarriers.

An inverse fast Fourier transform (IFFT) apparatus 113 transforms N symbols into orthogonal multicarrier signals. A cyclic prefix (CP) attachment unit 114 inserts CPs into the multicarrier signals for each Fourier target time period. Then, the transmitter 10 generates radio signals from the multicarrier signals supplied from the CP attachment unit 114 and transmits them to the air.

Some operations of generating broadcast channels and shared data channels in the broadcast channel and shared data channel generator 100 are described.

The system information generation unit 101₁ generates minimum system information required to be transmitted in the broadcast channels. The system information generation unit 101₁ may generate system information necessary for cell search and including at least one information item of information indicative of the system bandwidth of its own base station, information indicative of shared data channels for transmitting system information items other than the required minimum system information, cell IDs and the number of transmission antennas.

In 3GPP Evolved UTRA and UTRAN, the system bandwidth can be between 1.25 MHz and 20 MHz. In this embodiment, the transmitter 10 always transmits the broadcast channels at 1.25 MHz or selectively transmits them at either 1.25 MHz or 5 MHz.

In the case of the transmission bandwidth of the broadcast channels being predefined in this manner, mobile stations can receive the broadcast channels even before the system bandwidth is known and can recognize the system bandwidth through reception of the broadcast channels.

For the transmitter 10 of the present embodiment, the broadcast channel is defined as a physical channel predefined in the system and is independent of the shared data channel.

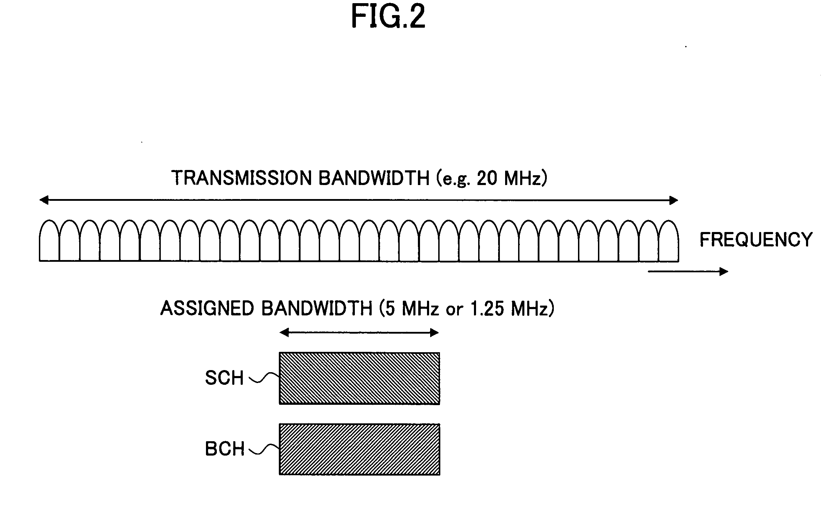

Also, as shown in FIG. 2, mobile stations can receive the broadcast channels immediately after cell search without modification of the center frequency by transmitting the broadcast channels at the same center frequency as the synchronization channels. As a result, the required minimum system information can be obtained in a short time period. In addition, reception operations in the mobile stations can be simplified by setting the center frequency of the broadcast channels to be in the center of the system bandwidth.

Also, the broadcast channels are transmitted at a lower bandwidth than the minimum bandwidth all the mobile stations must receive, and thus all the mobile stations are enabled to receive the broadcast channels.

The system information generation unit 101₂ generates system information items other than the required minimum system information. For example, the system information generation unit 101₂ generates various system information items such as downlink control channel configuration, peripheral cell information (peripheral cell IDs, transmission timings, etc.), various regulation information, uplink interference power information, own cell control channel configuration such as radio resource information of shared data channels for transmitting the system information, and information indicative of a DRX period.

The type and/or size of system information may be variable for individual operators and cells. If the system information items other than the required minimum system information are transmitted in shared data channels as described above, the system information can be flexibly transmitted.

In this case, information indicating which portion of the shared data channel, that is, information indicating which frequency and time are used to transmit the system information, is transmitted in the broadcast channel as mentioned above. As a result, control information in the broadcast channel may be accordingly increased. On the other hand, since mobile stations can receive the shared data channel for transmitting the system information immediately after reception of the broadcast channel, the mobile stations can obtain the system information in a shorter time period. In addition, since different system information items can be used for different cells, higher flexibility is achieved.

Also, information indicative of frequency and time for transmitting the system information may be transmitted in L1/L2 control channels. Since the mobile station receives the shared data channel for transmitting the system information after reception of the broadcast channel and further reception of the L1/L2 control channels, it may take a longer time for the mobile station to obtain the system information while the smaller amount of control information can be transmitted in the broadcast channel. In addition, since different system information items can be used for different cells, higher flexibility is achieved.

Also, information indicative of frequency and time for transmitting the system information may be predefined in the system. As a result, while the flexibility is degraded due to the fixed system, the mobile station can obtain the system information in a shorter time period without an increase in control information of the broadcast channel.

Also, the system information items transmitted in the shared data channel other than the required minimum system information transmitted in the broadcast channel may be classified and transmitted in such a manner to identify what the classified system information is and which portion of the shared data channel, that is, which frequency and time, is used to transmit the classified system information items.

For example, information blocks whose contents may be changed in a relatively short time period such as regulation information are differentiated from information blocks whose contents may not be basically changed over time such as peripheral cell information, and then the transmission is carried out in such a manner to identify which portion is used to transmit the respective information blocks.

In this manner, the mobile station can be designed to receive only portions required to be received periodically. As a result, it is possible to reduce battery energy consumed in waiting time of the mobile station.

For example, the system information generation unit 101₂ generates as the system information regulation information, uplink interference power information, information indicative of its own cell control channel configuration (such as radio resource information of shared data channels for transmitting the system information), peripheral cell information (peripheral cell IDs, transmission timings, etc.) and information indicative of an intermittent reception period, classifies these information items and generates information indicating which portions of the shared data channel are used to transmit the information items.

The paging information generation unit 116 generates paging indicator information and paging information based on paging or calling signals supplied networks.

In PDC (Personal Digital Cellular) or 3G, physical control channels are defined separately from data channels for transmission of the paging information and other control information and are used to transmit the paging information.

If the paging information is transmitted in shared data channels, the physical control channels for the paging information do not have to be defined, resulting in simplified radio interfaces. As a result, reception operations in mobile stations and transmission operations in base stations can be simplified. Also, since data can be handled at various data rates in the shared data channels, more flexible paging is achieved.

As presented below, in transmission of the paging information, common spread codes may be applied to sectors within the same base station in order to enable soft-combining reception in the receiver side, and paging channels may be defined separately from the shared data channels. Here, radio resource blocks for the paging channels, that is, time and frequency, may be fixed or variable. In the variable case, information indicative of radio resource blocks for the paging channels may be transmitted in the paging indicator channel or the L1/L2 control channels.

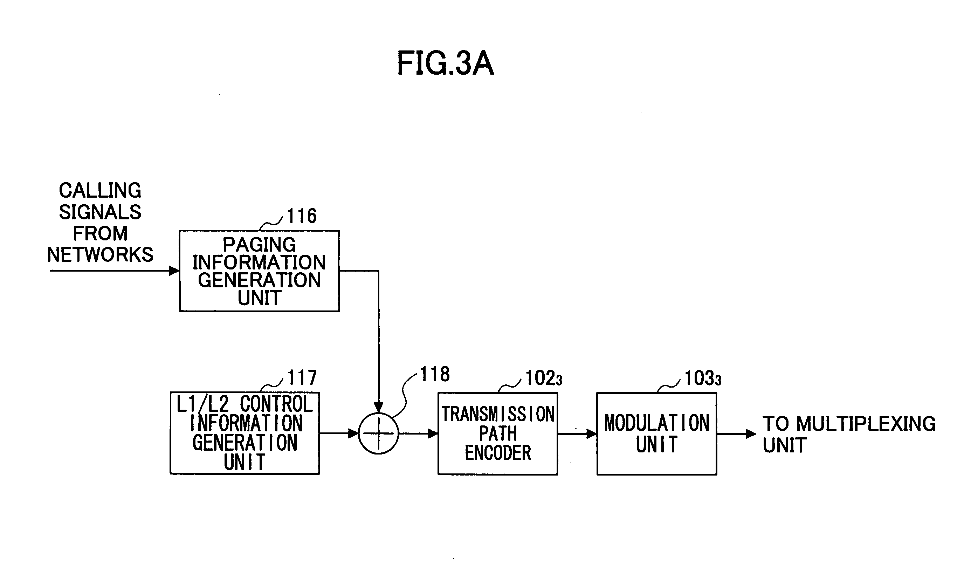

Also, PI information indicating presence of paging may be transmitted in the L1/L2 control channel or the broadcast channel. In this case, as shown in FIG. 3A, the paging information generated by the paging information generation unit 116 from a calling or paging signal supplied from a network is added by an adder 118 to PI information generated by an L1/L2 control information generation unit 117, and the resulting information is supplied to a transmission path encoding unit 102₃.

Also, the paging indicator channel and the paging channel or the shared data channel for transmitting the paging information is transmitted at the same center frequency as the frequency for transmitting broadcast channels. According to the present embodiment, reception operations in mobile stations can be simplified.

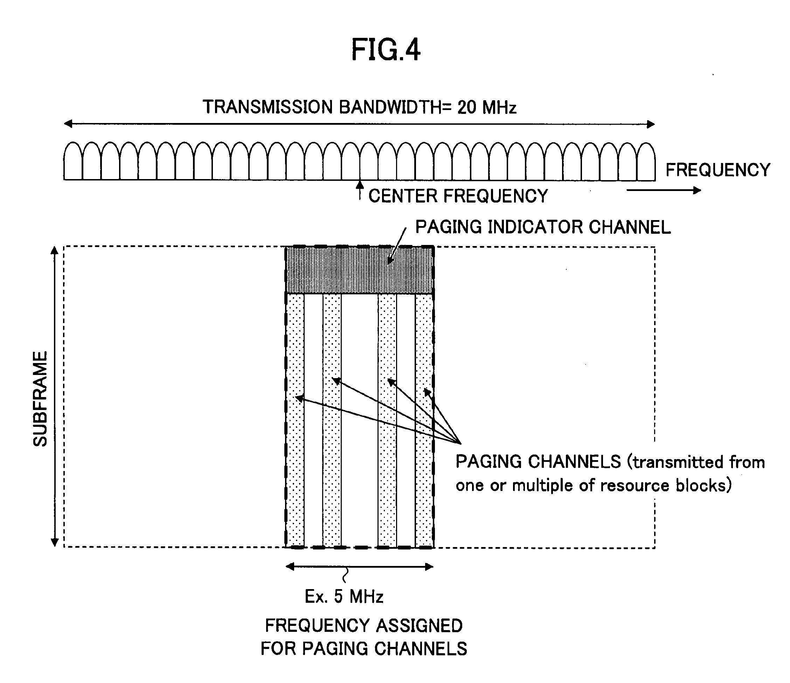

Also, reception operations in mobile stations can be simplified by transmitting the paging indicator channel and the paging channel or the shared data channel for transmitting the paging information at the same center frequency as the center frequency of the system bandwidth, as shown in FIG. 4.

Also, all mobile stations can receive paging signals by transmitting the paging channel or the shared data channel for transmitting the paging information at a bandwidth less than the minimum bandwidth all the mobile stations are required to receive.

Also, reception operations in mobile stations can be simplified by using a single radio resource block or a portion thereof to transmit the paging channel or the shared data channel for transmitting the paging information, as shown in FIG. 4.

In 3G, physical control channel PICH (Page Indicator Channel) dedicated to PI information is defined. In this manner, reception operations in mobile stations and transmission operations in base stations can be simplified by including PI information function in L1/L2 control channels.

Also, control signals over the shared data channels are transmitted in the L1/L2 control channels, and control signals over the shared data channels for transmitting the paging information or the paging channels are transmitted in PICH. As a result, radio resource blocks for the L1/L2 control channels do not have to be identical to radio resources for the PICH.

When a mobile station recognizes the presence of paging based on PI information, the mobile station receives information indicative of a shared data channel where the paging information is being transmitted.

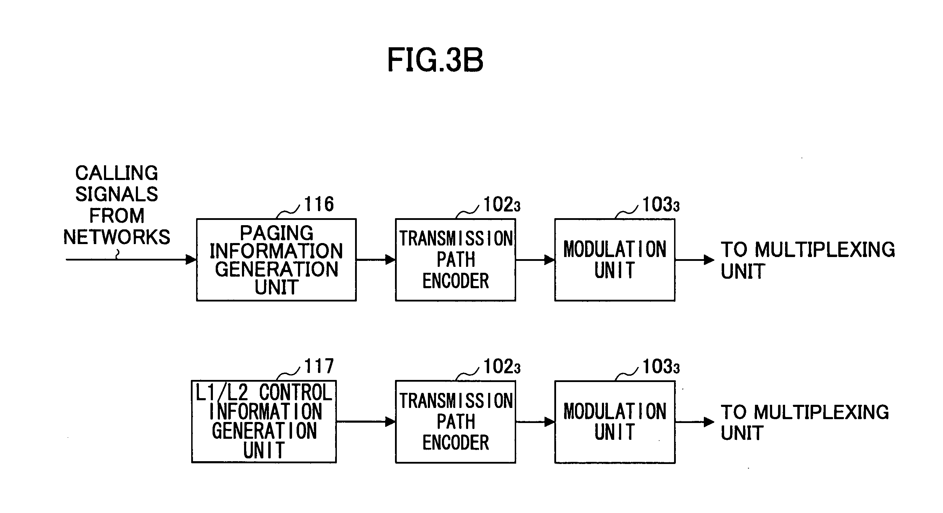

Also, as shown in FIG. 3B, a physical control channel dedicated to PI information may be used to transmit PI information. In this case, the PI information is transmitted in the PICH while the paging information is transmitted in the paging channel or the shared data channel.

Mobile stations can receive PICH immediately after execution of cell search by arranging the PICH in the center of the system bandwidth.

In cases of the PI information being transmitted in the L1/L2 control channels, information indicative of radio resource blocks (time and frequency) of shared data channels for transmitting the paging information to a mobile station receiving the PI information is transmitted in the L1/L2 control channels. In other words, a function of transmitting the radio resource blocks for transmitting the paging information is included in PI information functions of the L1/L2 control channels. This increases accordingly the amount of control information for the L1/L2 control channels but can improve flexibility.

Also, information indicative of radio resource blocks for the shared data channels for transmitting the paging information to a mobile station receiving PI information may be predefined in the system. As a result, it is possible to increase the amount of control information for the L1/L2 control channels.

Also, information indicative of radio resource blocks for the shared data channels for transmitting the paging information to a mobile station receiving PI information may be transmitted as system information.

Mobile stations are notified of the presence of paging through the PI function based on a DRX cycle.

A base station may transmit the DRX (Discontinuous Reception) cycled by making the DRX cycle variable.

As the cycle for notifying a certain mobile station of the presence of paging through the PI function is longer, the intermittent reception interval of the mobile station becomes longer. This is advantageous in terms of battery savings but may increase paging delay. A variable DRX cycle can achieve flexible operations.

In this case, the DRX cycle is transmitted in the system information transmitted in shared data channels, as stated above. According to this embodiment, the transmission of the DRX cycle can be implemented without an increase in the information amount of broadcast channels. Also, the DRX cycle can be made variable for individual cells.

Also, the transmitter 10 may transmit the DRX cycle in BCHs. In this case, the system information generation unit 101₁ generates information indicative of the DRX cycle. According to this embodiment, the information amount of broadcast channels may be increased accordingly, but the DRX cycle can be identified without reception of the shared data channels. Also, the DRX cycle can be made variable for individual cells.

In the case of the paging information being transmitted, the transmission path encoding unit 102₃ performs encoding at a predefined and fixed coding rate, and the modulation unit 103₃ performs modulation in accordance with a predefined and fixed modulation scheme.

In the transmission of the paging information, the network side has no knowledge of the position of mobile stations and thus cannot obtain the amount of propagation loss. As a result, the paging information must be transmitted under the assumption of the worst case, that is, the case where a mobile station resides on the cell boundary. For this reason, the modulation scheme and the coding rate for enabling the paging information to be received at mobile stations residing on the cell boundary may be applied.

Under the fixed modulation scheme and coding rate, the modulation scheme and the coding rate do not have to be transmitted in the PI function, resulting in a smaller amount of control information for the PI function. Specifically, the QPSK modulation scheme and the coding rate 1/3 or 1/2 may be applied.

Next, some operations in the control unit 115 are described.

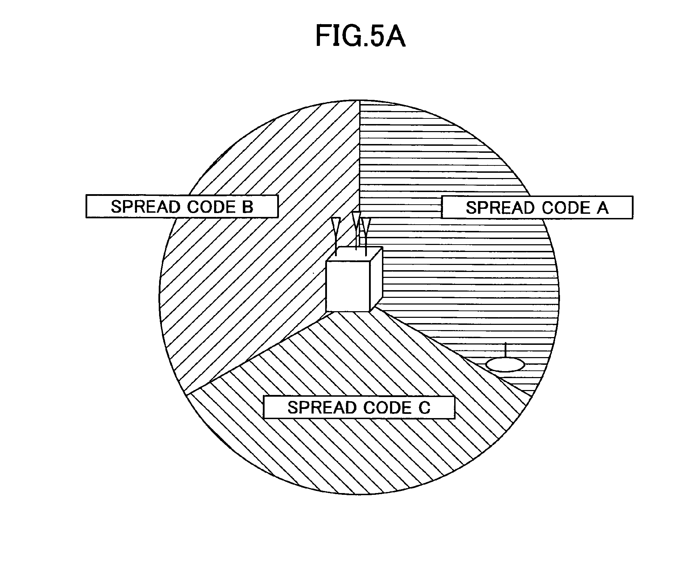

In CDMA, when multiple base stations transmit similar signals in multiple sectors, mobile stations residing on the boundary area between adjacent sectors can receive the similar signals from the adjacent sectors. For example, the mobile stations can receive signals transmitted from the adjacent sectors, as shown in FIG. 5A. In this case, however, the base stations need to use twice as many radio resources. In the mobile stations, on the other hand, signals transmitted from the adjacent sectors are subjected to interference with each other, resulting in wastefulness and inefficiency.

In OFDMA, when common spread codes are used among sectors and the transmission timings are synchronized, signals from adjacent sectors are not subjected to interference and are combined at reception of signals transmitted from the sectors (soft-combining).

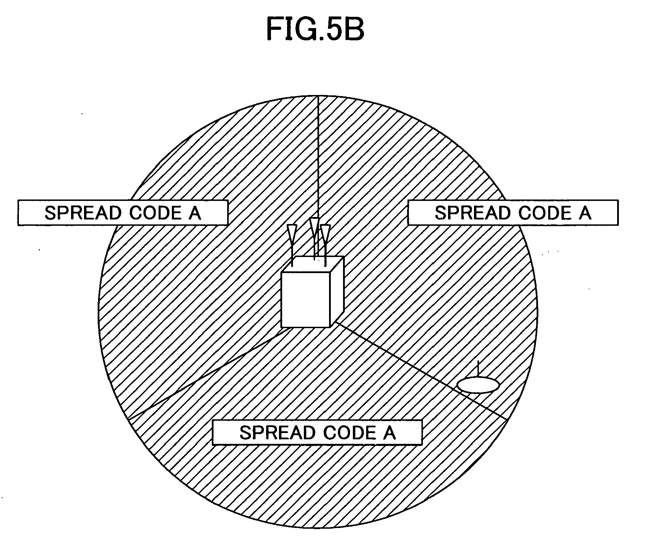

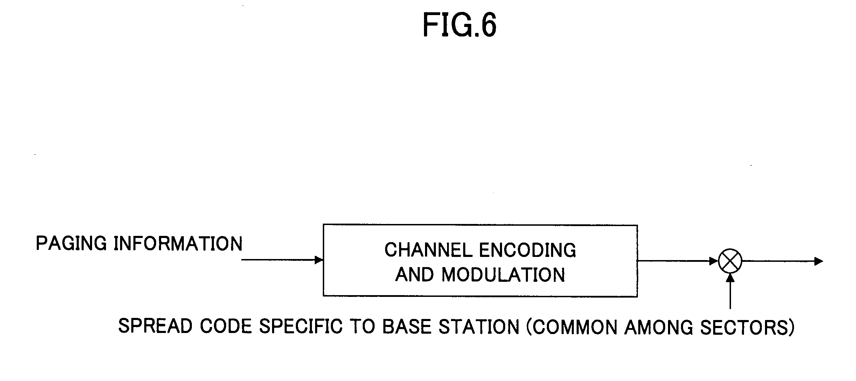

In the case of PI information being transmitted in L1/L2 control channels, the soft-combining is applied to only the paging information transmitted in shared data channels. Since signals other than the PI information are also transmitted in the L1/L2 control channels, different spread codes are applied for the different sectors. These spread codes cannot be made uniform. Specifically, the control unit 115 makes the spread codes uniform over paging information transmitted in paging channels or shared data channels, as shown in FIG. 6, and has control to synchronize the transmission timing. For example, as shown in FIG. 5B, a base station transmits paging information multiplied with common spread codes from adjacent sectors at the same timing through coordination between schedulers of the sectors. According to this embodiment, the receiver side can receive combined paging information.

Also, if the PI information is transmitted in PICH and the paging information is transmitted in paging channels or shared data channels, the soft-combining is applied to pieces of paging information transmitted in the PICH and/or the paging or shared data channels. In this case, the control unit 115 makes the spread code and the transmission timing uniform over sectors for the paging channel or the shared data channels where the paging information is multiplexed. Also, the control unit 115 makes the spread codes and the transmission timing uniform over sectors for paging indicator channel where paging indicator information is multiplexed.

Specifically, the control unit 115 uses uniform spread codes for PI information transmitted in PICH and/or the paging information transmitted in paging channels or shared code channels and has control to synchronize the transmission timing. For example, as shown in FIG. 5B, a base station transmits the PI information and/or the paging information multiplied with the common spread codes from adjacent sectors at the same timing under coordination of schedulers of the sectors. According to this embodiment, the receiver side can receive the combined PI information and/or the paging information.

According to this embodiment, the reception quality of the PICH and/or the paging channel or the shared data channel can be improved through the soft-combining of sectors within the same base station without complicated operations in the mobile station side.

Also, the transmitter 10 may apply transmit diversity suitable for paging to channels with the PI function, such as the L1/L2 control channels or physical channels (PICHs) dedicated to the PI information, or the paging channels or the shared data channels for transmitting the paging information. The application of transmit diversity enables paging control information to be efficiently transmitted. Specifically, the transmission can be carried out with less total radio resources of time, frequency and power.

Also, the control unit 115 may control broadcast channels to use uniform spread codes and transmission timing therein.

In paging, no control loop between base stations and mobile stations has been established, although it is established in transmission of normal data channels. Thus, the open-loop transmit diversity is suitable. As examples of the transmit diversity, STBC (Space Time Block Code) as described in non-patent document 1, SFBC (Space Frequency Block Code) as described in non-patent document 2 and TSTD (Time Switched Transmit Diversity) as described in non-patent document 3 are presented. While a transmission antenna is changed in a constant cycle (time) in accordance with the TSTD, either FSTD (Frequency Switched Transmit Diversity) or CDD (Cyclic Delay Diversity) where the transmission antenna is changed for each frequency can be applied.

Also, the transmitter 10 may apply time diversity to channels with the PI function, such as the L1/L2 control channels or physical channels (PICHs) dedicated to the PI information, or the paging channels or the shared data channels for transmitting the paging information.

The application of the time diversity enables paging control information to be efficiently transmitted. Specifically, less total radio resources of time, frequency and power can be used to transmit the paging control information. For example, iterative transmission may be applied as the time diversity method. According to this embodiment, the transmission side can be simplified while higher quality reception can be achieved at the reception side through simple chase combination as described in non-patent document 5. Also, for example, incremental redundancy (IR) may be applied as the time diversity method, as described in non-patent document 6. According to this embodiment, while the transmission and reception operation may be more complicated than that of iterative transmission, higher quality reception can be achieved.

Also, when transmissions are carried out several times for the time diversity, frequency hopping may be performed within frequency blocks assigned for each of the transmissions in advance. According to this embodiment, in addition to effect of the time diversity, effect of frequency diversity can be obtained, resulting in higher quality paging.

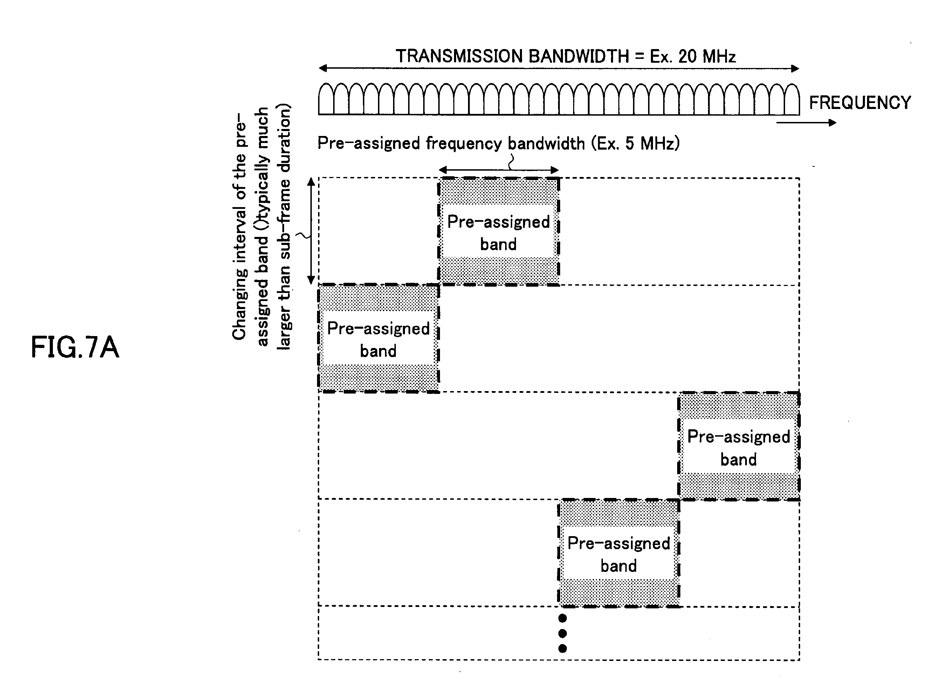

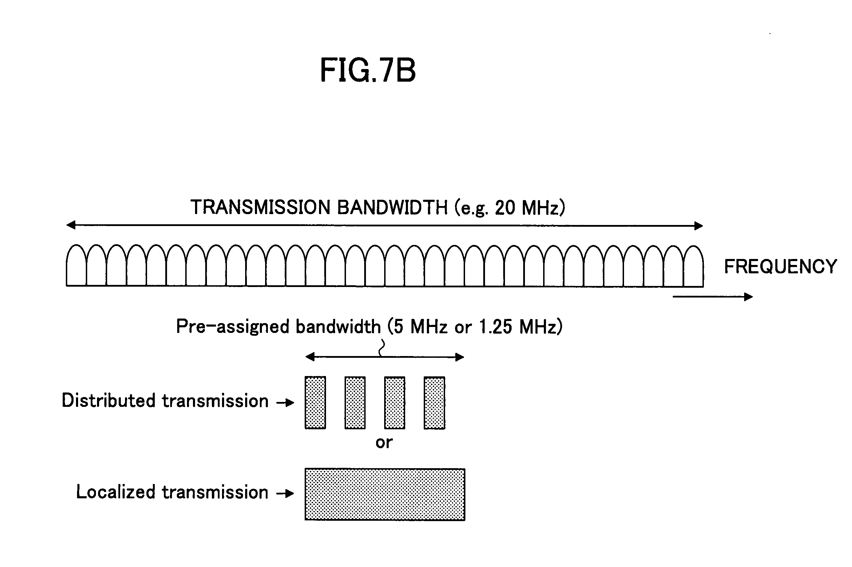

Also, radio resource blocks assigned for paging channels may be changed in a certain cycle, as shown in FIG. 7. According to this embodiment, the channel workload can be randomized, resulting in efficient use of radio resources.

Also, as shown in FIG. 7B, either a distributed transmission method or a localized transmission method is used to obtain the frequency diversity effect.

Also, frequency diversity may be applied by repetition on the frequency axis or channel encoding. According to this embodiment, the frequency diversity effect can be obtained, resulting in high quality paging.

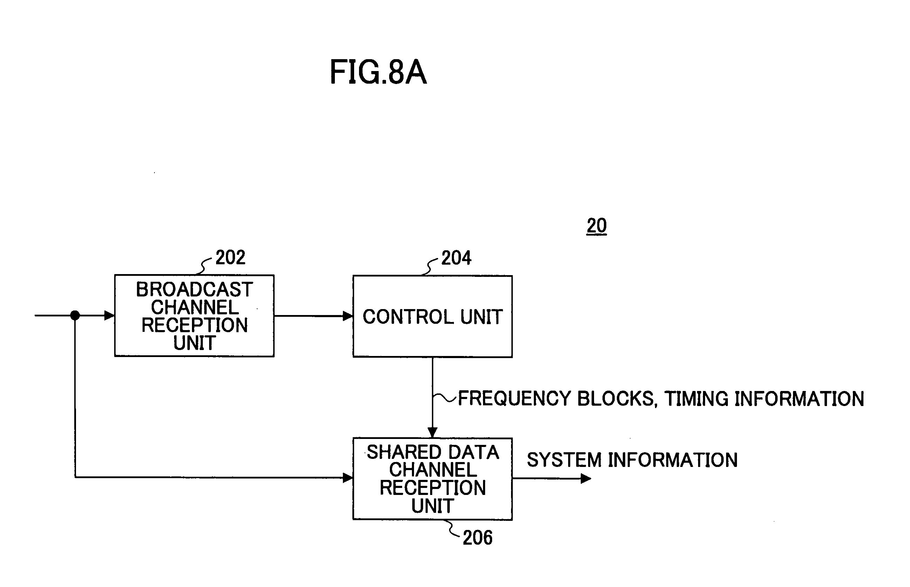

Next, the receiver 20 according to one embodiment of the present invention is described with reference to FIG. 8A.

In this embodiment, the receiver 20 includes a broadcast channel reception unit 202 to which received signals are supplied, a shared data channel reception unit 206 serving as reception means, and a control unit 204 coupled to the broadcast channel reception unit 202 and the shared data channel reception unit 206 and serving as extraction means.

The broadcast channel reception unit 202 receives broadcast channels transmitted from the transmitter 20 and supplies them to the control unit 204. The control unit 204 refers to required minimum system information contained in the broadcast channels and controls the shared data channel reception unit 206 based on the system information. For example, the control unit 204 obtains information indicative of a bandwidth for transmitting shared data channels based on information indicative of the shared data channels for transmitting system information items other than the required minimum system information contained in the supplied broadcast channels and controls the shared data channel reception unit 206 based on the bandwidth.

In the broadcast channel reception unit 202, different data are transmitted for different sectors within the same base station, but if common data are partially used in the sectors, soft-combining may be applied similar to paging channels.

For example, the control unit 104 provides the shared data channel reception unit 206 with information indicative of frequency blocks of the shared data channels for transmitting system information items other than the required minimum system information and information indicative of reception timings. The shared data channel reception unit 206 receives the shared data channels based on the supplied information indicative of the frequency blocks and the reception timings.

In the shared data channel reception unit 206, different data are transmitted for different sectors within the same base station, but if common data are partially used in the sectors, soft-combining may be applied. For example, the shared data channel reception unit 206 applies soft-combining to shared data channels for transmitting paging information.

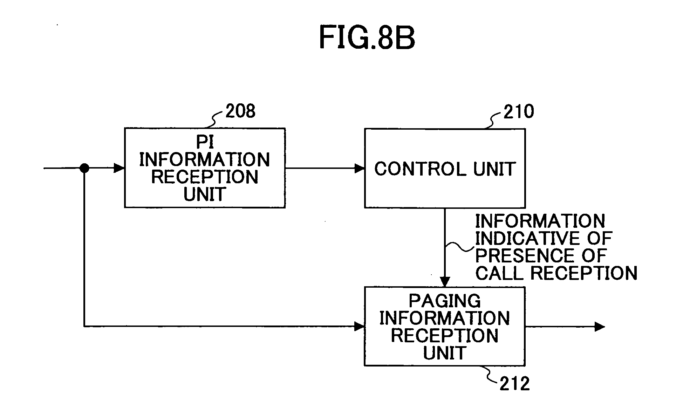

The receiver 20 receiving paging indicator information and paging information is described with reference to FIG. 8B.

The receiver 20 includes a paging indicator information reception unit 208 and a paging information reception unit 212, to both of which received signals are supplied, and a control unit 210 coupled to the paging indicator information reception unit 208 and the paging information reception unit 212.

The paging indicator information reception unit 208 receives paging indicator information transmitted in L1/L2 control channels or broadcast channels. If the paging indicator information is transmitted in broadcast channels, the paging indicator information reception unit 208 may apply the soft-combining.

The paging information reception unit 212 receives paging information transmitted in paging channels or shared data channels. The paging information reception unit 212 may apply soft-combining to paging information transmitted in paging channels or shared data channels.

The control unit 210 determines the presence of incoming information based on the paging information received by the paging indicator information reception unit 208 and if the incoming information is present, the control unit 210 controls the paging information reception unit 212 to receive the paging information.

In order to perform the soft-combining between sectors, channel estimation values of signals received from the individual sectors are required.

In the receiver 20, pilot channels specific to the sectors are used in the broadcast channel reception unit 202 and the paging information reception unit 212 to derive the channel estimation values for the individual sectors and then a soft-combining channel estimation value from the total channel estimation values for the individual sectors. According to this embodiment, the sector independent pilot channels are required to receive shared data channels, and thus the embodiment can be implemented without the necessity of any addition pilot channels.

Also, if sector common pilot channels are separately transmitted from the transmitter 10, the receiver 20 may derive the soft-combining channel estimation value directly in the broadcast channel reception unit 202 and the paging information reception unit 212. According to this embodiment, simple channel estimation can be achieved at the soft-combining.

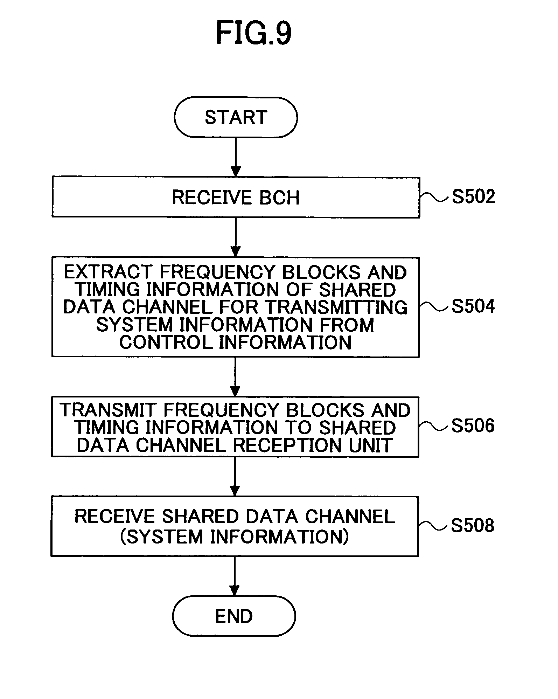

Next, some operations of the receiver 20 according to one embodiment of the present invention are described with reference to FIG. 9.

At step S502, the broadcast channel reception unit receives a broadcast channel (BCH).

At step S504, the control unit 204 extracts information indicative of frequency blocks and timings of shared data channels for transmitting system information items other than required minimum system information from control information stored in the broadcast channel.

At step S506, the control unit 204 transmits the information indicative of the frequency blocks and the timing extracted at step S504 to the shared data channel reception unit 206.

At step S508, the shared data channel reception unit 206 receives the shared data channels based on the information indicative of the frequency blocks and the timings.

Next, assignment timings of user IDs used for packet access are described. The user IDs are assigned for individual cells.

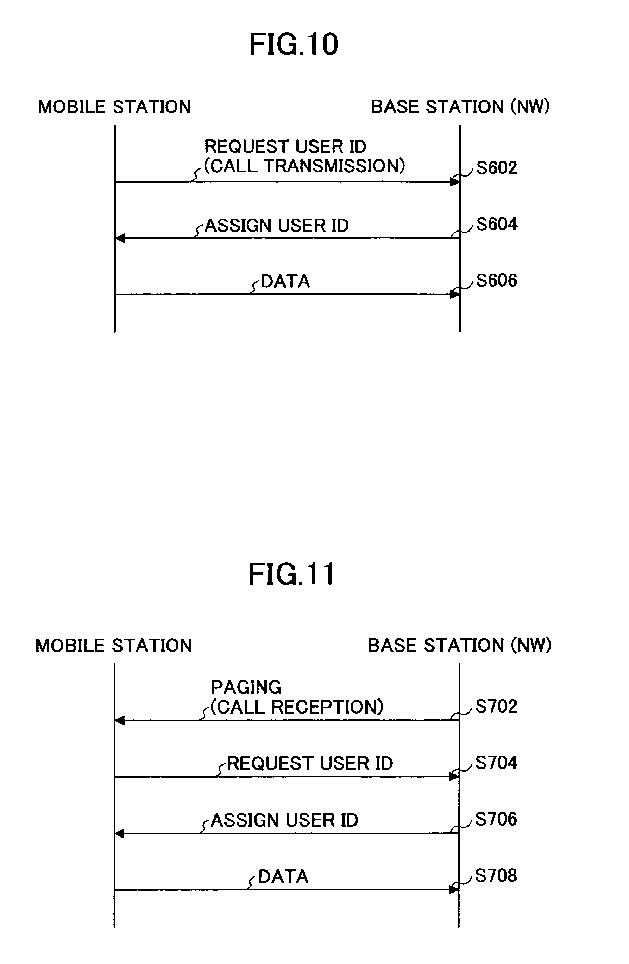

An exemplary case of calling from a mobile station is described with reference to FIG. 10.

In this case, at step S602, the mobile station requests a base station to provide a user ID. An ID used for the requesting is transmitted as system information. Alternatively, a system predefined common ID may be used.

At step S604, the base station assigns the user ID and transmits the user ID to the mobile station.

At step S606, the mobile station transmits data by using the transmitted user ID.

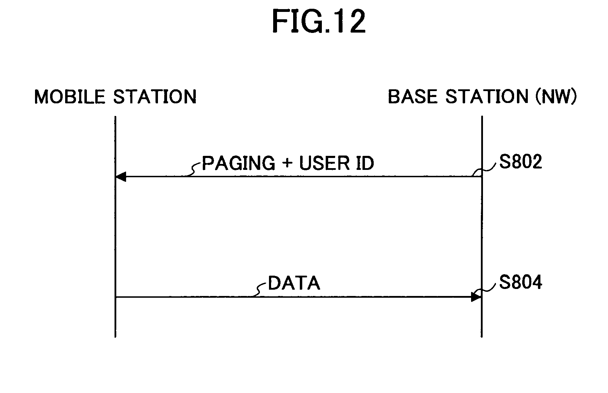

Next, an exemplary case of calling to a mobile station is described with reference to FIGS. 11 and 12.

In paging, no user ID for packet access is transmitted from the network side. After a reply to the paging is returned from the mobile station, the base station transmits the user ID for packet access from a cell receiving the reply.

Specifically, the operation is further described with reference to FIG. 11.

At step S702, the base station transmits paging information to a mobile station.

At step S704, the mobile station transmits a request for a user ID to the base station.

At step S706, the base station assigns the user ID for the mobile station and transmits the user ID to the mobile station.

At step S708, the mobile station transmits data by using the transmitted user ID.

According to this embodiment, since the mobile station presents the ID for packet access to the network side after paging, the delay time before starting the packet access may be slightly longer. On the other hand, it is possible to prevent assignment of unnecessary user IDs in cells where the mobile station does not reside and transmission of unnecessary control information. This may be more advantageous in that the prevented assignment of unnecessary user IDs is highly effective in wide paging areas as found in location registration areas.

In another embodiment, the user ID for packet access may be also transmitted in the paging from the network side.

The embodiment is described in detail with reference to FIG. 12.

At step S802, a base station transmits paging information and a user ID to a mobile station.

At step S804, the mobile station transmits data by using the transmitted user ID.

According to the present embodiment, if an ID paging area for packet access after paging for the mobile station is large as seen in location registration areas, that is, if simultaneous calling is carried out for a large number of cells, a user ID is assigned and transmitted for cells where the mobile station does not reside, resulting in an increase in processing workload and control signals in the base station. On the other hand, the mobile station can recognize the user ID immediately after paging and start the packet access.

In contrast, if the paging area is small as seen in individual cells, for example, if the network side can focus on a small number of cells to identify the mobile station residing cell, the present embodiment may be more advantageous in that a lesser number of unnecessary user IDs can be assigned.

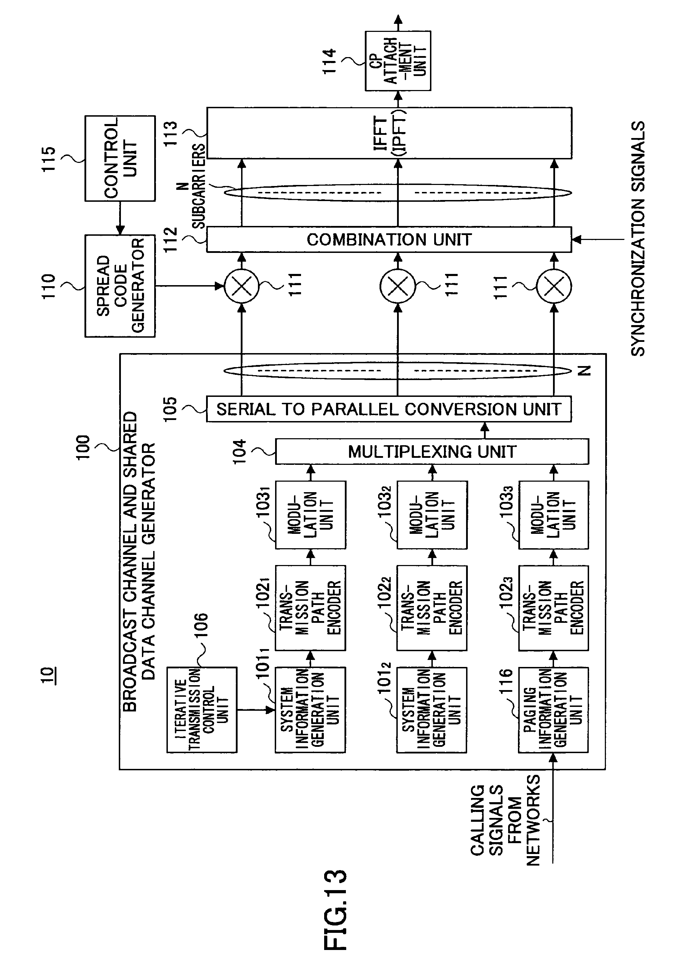

Next, a transmitter according to another embodiment of the present invention is described with reference to FIG. 13.

In the above-mentioned embodiments, the case of broadcast channels being transmitted in frequency domains has been described. In this embodiment, the transmitter 10 transmits the broadcast channels in time domains.

The transmitter 10 according to the present embodiment, in addition to components of the transmitter described with reference to FIG. 1, further includes an iterative transmission control unit 106 coupled to the system information generation unit 101₁.

The iterative transmission control unit 106 determines the number of broadcast channels allocated within one radio frame and controls the system information generation unit 101₁. In other words, the iterative transmission control unit 106 determines how many times the broadcast channel is to be transmitted within the single radio frame. In this case, the multiplexing unit 104 multiplexes the broadcast channel within the single radio frame depending on the determined number of broadcast channels. As a result, the broadcast channel is transmitted within the single radio frame one or more times.

In this case, the iteratively transmitted broadcast channel is transmitted in the same transmission format.

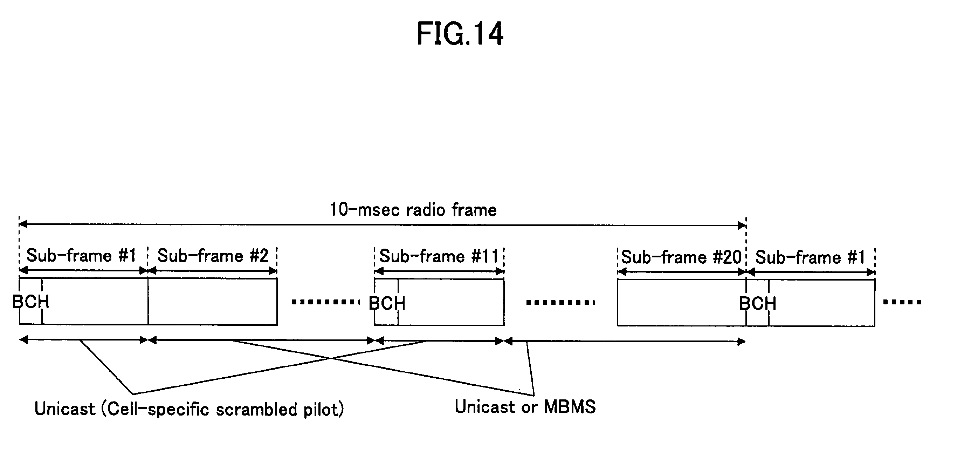

For example, if it is determined that the broadcast channel is assigned within one radio frame twice, the iterative transmission control unit 106 assigns the broadcast channel within the single radio frame twice, as shown in FIG. 14.

Also, the iterative transmission control unit 106 may map a broadcast channel into a subframe for transmitting a unicast channel. As a result, the broadcast channel is multiplexed into the unicast subframe.

Since multicast (MBMS) subframes are handled as common spread codes among cells, common pilots for the multicast subframe are not available for spread code detection in cell search. For this reason, the top subframe is always made a unicast (a spread code specific to cells is applied) in order to overcome the above problem, and thus the common pilot can be used for the spread code detection in the cell search.

Also, since system information specific to cells is broadcast in broadcast channels, the broadcast channels are mapped into subframes for transmitting unicast.

The system information generation unit 101₁ generates required minimum system information based on the number of broadcast channels allocated within one radio frame as determined by the iterative transmission control unit 106.

The transmission path encoder 102₁ always uses the same method in multiplexed subframes to encode the required minimum system information supplied from the system information generation unit 101₁ and then supplies encoded system information to the modulation unit 103₁. As a result, the transmitter 10 can always transmit the same signals. Thereby, the receiver 20 can improve reception SINR for enhanced quality through combination in the reception unit.

Also, the receiver 20 can demodulate the system information at reception of the broadcast channels. In other words, the system information can be demodulated at any timings.

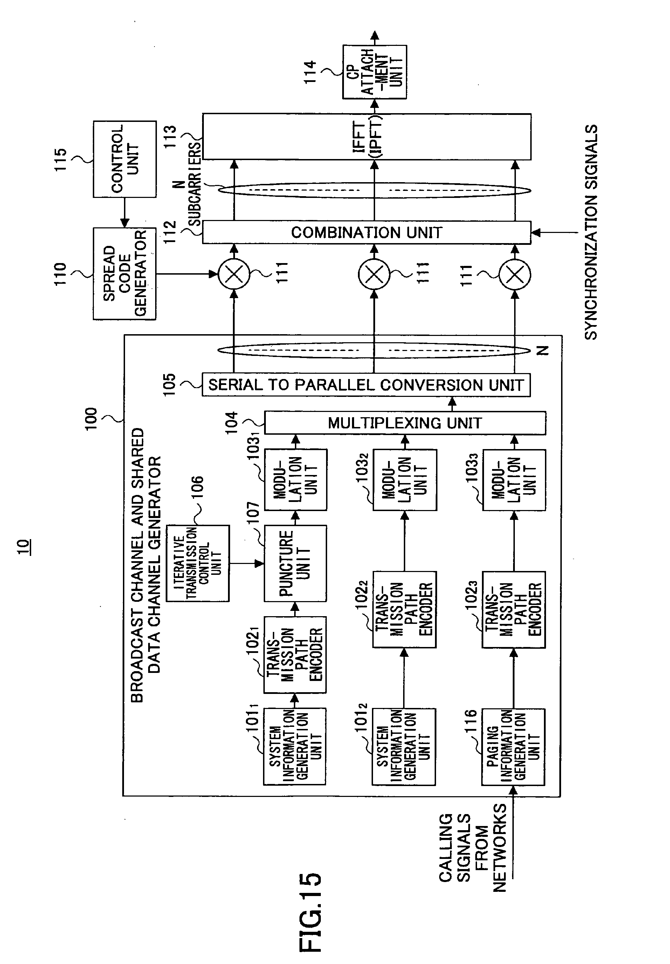

Next, a transmitter according to another embodiment of the present invention is described with reference to FIG. 15.

The transmitter 10 according to this embodiment, if a broadcast channel is transmitted within one radio frame one or more times, transmits different puncture patterns in multiplexed frames.

The transmitter 10 according to the present embodiment, in addition to components of the transmitter described with reference to FIG. 1, further includes a puncture unit 107 coupled to the transmission path encoder 102₁ and an iterative transmission control unit 106 coupled to the puncture unit 107. The puncture unit 107 is coupled to the modulation unit 103₁.

The iterative transmission control unit 106 determines the number of broadcast channels assigned within one radio frame and controls the puncture unit 107. In other words, the iterative transmission control unit 106 determines how many times the broadcast channel is to be transmitted within the single radio frame. In this case, the multiplexing unit 104 multiplexes the broadcast channel within the single radio frame depending on the determined number of broadcast channels. As a result, the broadcast channel is transmitted within the single radio frame one or more times.

In this case, the iteratively transmitted broadcast channel is transmitted in the same transmission format.

Required minimum system information supplied from the system information generation unit 101₁ is encoded in the transmission path encoder 102₁ and supplied to the puncture unit 107. The puncture unit 107 punctures with different puncture patterns in multiplexed subframes based on the number of broadcast channels assigned within one radio frame as determined by the iterative transmission control unit 106. As a result, the iteratively transmitted broadcast channel is transmitted with the different puncture patterns.

According to this embodiment, a portion of coding words for a low coding rate can be transmitted. The receiver 20 can improve characteristics for enhanced encoding gain through combination in the reception unit. Thus, an error rate can be reduced compared to cases without puncturing.

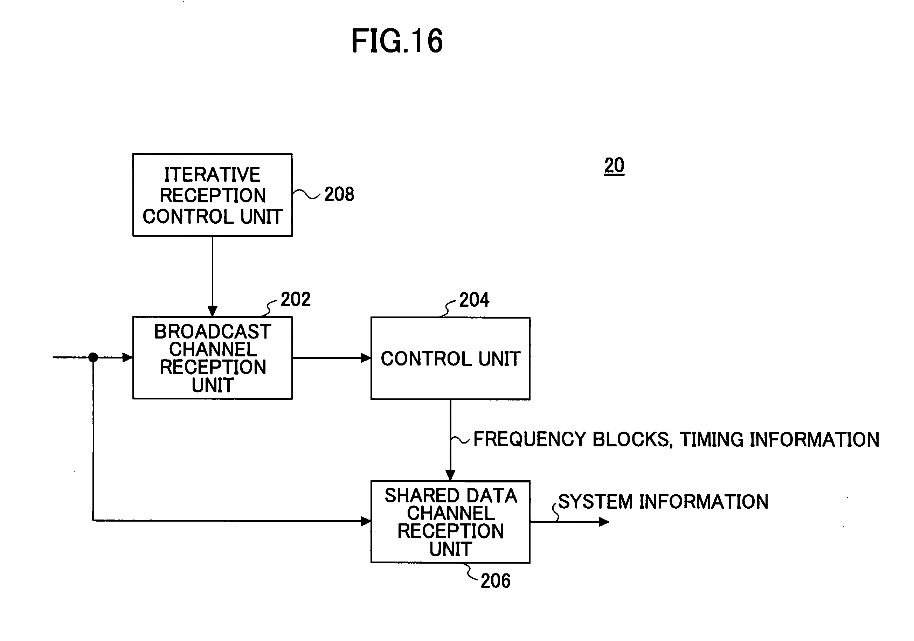

Next, a receiver according to another embodiment of the present invention is described with reference to FIG. 16.

The receiver 20, in addition to components of the receiver described with reference to FIG. 8A, further includes an iterative reception control unit 208 coupled to the broadcast channel reception unit 202.

The iterative reception control unit 208 controls the broadcast channel reception unit 202 to receive subframe signals where broadcast channels are multiplexed. For example, the iterative reception control unit 208 controls reception of the broadcast channels depending on the number of transmission of the broadcast channels within one radio frame.

The broadcast channel reception unit 202 performs in-phase combination and demodulation on broadcast channel multiplexed subframe signals under control by the iterative reception control unit 208.

Also, the broadcast channel reception control unit 208 may perform code combination and demodulation on the subframe signals where punctured broadcast channels are multiplexed.

This international patent application is based on Japanese Priority Applications No. 2006-010499 filed on January 18, 2006, No. 2006-031743 filed on February 8, 2006, and No. 2006-127991 filed on May 1, 2006, the entire contents of which are hereby incorporated by reference.

### [Industrial Applicability]

The transmitter, receiver and communication method according to the present invention can be applied to radio communication systems.

## Claims

1. A transmitter comprising:
a system information generation unit generating system information;
a multiplexing unit multiplexing a system information item in the system information required for cell search in a broadcast channel and multiplexing another system information item into the system information other than the system information item required for cell search in a channel different from the broadcast channel; and
a transmission unit transmitting the broadcast channel and the channel different from the broadcast channel.

2. The transmitter as claimed in claim 1, wherein the broadcast channel is defined as a physical channel separated from a shared data channel and predefined in a system.

3. The transmitter as claimed in claim 2, wherein the broadcast channel is transmitted at a same center frequency as a synchronization channel.

4. The transmitter as claimed in claim 2, wherein the broadcast channel is transmitted at a center frequency of a system bandwidth.

5. The transmitter as claimed in claim 2, wherein the broadcast channel is transmitted in a bandwidth less than or equal to a reception bandwidth that all receivers are required to minimally receive.

6. The transmitter as claimed in claim 1, wherein the system information generation unit generates at least one of information indicative of a system bandwidth, information indicative of a shared data channel for transmitting the system information item other than the system information item required for cell search, and information indicative of a cell ID and a number of transmission antennas as the system information required for cell search.

7. The transmitter as claimed in claim 1, wherein the system information generation unit generates at least one of regulation information, uplink interference power information, information indicative of an own cell control channel configuration, peripheral cell information and an intermittent reception cycle.

8. The transmitter as claimed in claim 1, wherein the multiplexing unit multiplexes information indicative of a shared data channel for transmitting the system information item other than the system information item required for cell search in an L1/L2 control channel.

9. The transmitter as claimed in claim 1, further comprising:
a paging information generation unit generating paging indicator information and paging information based on a calling signal from a network,
wherein the multiplexing unit multiplexes the paging indicator information into one of an L1/L2 control channel and a paging indicator channel and the paging information into one of a shared data channel and a paging channel.

10. The transmitter as claimed in claim 9, wherein the multiplexing unit multiplexes information indicative of a radio resource of the shared data channel and the paging channel for transmitting the paging information into the L1/L2 control channel.

11. The transmitter as claimed in claim 9, wherein the multiplexing unit multiplexes information indicative of the shared data channel and the paging channel for transmitting the paging information into a broadcast channel.

12. The transmitter as claimed in claim 9, wherein the multiplexing unit is transmitted at a same center frequency as a synchronization channel.

13. The transmitter as claimed in claim 12, wherein the center frequency is equal to a center frequency of a system bandwidth.

14. The transmitter as claimed in claim 9, wherein the multiplexing unit multiplexes the shared data channel or the paging channel for transmitting the paging information into one radio resource block or a portion thereof.

15. The transmitter as claimed in claim 9, wherein the multiplexing unit multiplexes the paging indicator channel and the L1/L2 control channel into radio resource blocks different from each other.

16. The transmitter as claimed in claim 1, wherein the transmission unit applies transmit diversity to a shared data channel, a paging indicator channel and a paging channel.

17. The transmitter as claimed in claim 1, wherein the transmission unit applies at least one of time diversity and frequency diversity to a shared data channel.

18. The transmitter as claimed in claim 1, further comprising:
a control unit controlling the broadcast channel to use a common spread code and transmission timing over sectors.

19. The transmitter as claimed in claim 9, further comprising:
a control unit controlling a shared data channel for multiplexing the paging information to use a common spread code and transmission timing over sectors.

20. The transmitter as claimed in claim 9, further comprising:
a control unit controlling a paging indicator channel for multiplexing the paging indicator information to use a common spread code and transmission timing over sectors.

21. The transmitter as claimed in claim 1, further comprising:
an iterative transmission control unit determining a number of broadcast channels assigned within one radio frame,
wherein the multiplexing unit multiplexes a broadcast channel within one radio frame depending on the determined number of broadcast channels.

22. The transmitter as claimed in claim 21, wherein the multiplexing unit maps the broadcast channel into a subframe for transmitting a unicast channel.

23. The transmitter as claimed in claim 21, wherein an iteratively transmitted broadcast channel is transmitted in a same transmission format.

24. The transmitter as claimed in claim 21, further comprising:
a puncture unit puncturing with different puncture patterns for multiplexed subframes,
wherein an iteratively transmitted broadcast channel is transmitted with different puncture patterns.

25. A receiver comprising:
a broadcast channel reception unit receiving a broadcast channel transmitted from a base station;
an extraction unit performing cell search based on the broadcast channel and extracting information indicative of a channel different from the broadcast channel, the channel being for transmitting a system information item other than a system information item required for the cell search; and
a reception unit receiving the channel different from the broadcast channel based on the information indicative of the channel different from the broadcast channel, the channel being for transmitting the system information item other than the system information item required for the cell search.

26. The receiver as claimed in claim 25, wherein the broadcast channel reception unit applies soft-combining if at least a portion of received information is common over sectors.

27. The receiver as claimed in claim 25, wherein the reception unit applies soft-combining if at least a portion of the received information is common over sectors.

28. The receiver as claimed in claim 27, wherein the reception unit applies soft-combining to a paging channel or a shared data channel for transmitting paging information and/or a paging indicator channel for transmitting paging indicator information.

29. The receiver as claimed in claim 26, wherein the broadcast channel reception unit uses pilot channels specific to individual sectors to derive channel estimation values for the individual sectors and derives a soft-combining channel estimation value from a total of the channel estimation values of the individual sectors.

30. The receiver as claimed in claim 26, wherein the broadcast channel reception unit derives the soft-combining channel estimation value based on a pilot channel common to sectors.

31. The receiver as claimed in claim 27, wherein the reception unit uses pilot channels specific to individual sectors to derive channel estimation values for the individual sectors and derives a soft-combining channel estimation value from a total of the channel estimation values of the individual sectors.

32. The receiver as claimed in claim 27, wherein the reception unit derives the soft-combining channel estimation value based on a pilot channel common to sectors.

33. The receiver as claimed in claim 25, further comprising:
an iterative reception control unit controlling to perform in-phase combination on subframe signals,
wherein the broadcast channel is multiplexed into the subframe signals.

34. The receiver as claimed in claim 25, further comprising:
an iterative reception control unit controlling to perform code combination on subframe signals,
wherein the broadcast channel is multiplexed into the subframe signals.

35. A communication method comprising the steps of:
generating system information;
multiplexing a system information item in the system information required for cell search into a broadcast channel; and
transmitting the broadcast channel.

36. The communication method as claimed in claim 35, wherein the step of multiplexing comprises multiplexing a system information item other than the system information item required for cell search into a channel different from the broadcast channel, and the step of transmitting comprises transmitting the channel different from the broadcast channel.

37. The communication method as claimed in claim 35, further comprising the step of multiplexing information indicative of a shared data channel for transmitting another system information item other than the system information item required for cell search into an L1/L2 control channel.

38. The communication method as claimed in claim 35, further comprising the step of determining a number of broadcast channels assigned within one radio frame,
wherein the step of multiplexing comprises multiplexing the broadcast channel within one radio frame depending on the determined number of broadcast channels.

39. The communication method as claimed in claim 38, wherein the step of multiplexing comprises mapping the broadcast channel into a subframe for transmitting a unicast channel.

40. The communication method as claimed in claim 38, further comprising the step of transmitting an iteratively transmitted broadcast channel in a same format.

41. The communication method as claimed in claim 38, further comprising the steps of:
puncturing with different puncture patterns in multiplexed subframes; and
transmitting an iteratively transmitted broadcast channel with the different puncture patterns.

42. The communication method as claimed in claim 35, further comprising the steps of:
generating paging indicator information and paging information based on a calling signal from a network;
multiplexing the paging indicator information into one of an L1/L2 control channel and a paging indicator channel; and
multiplexing the paging information into one of a shared data channel and a paging channel.

43. The communication method as claimed in claim 42, further comprising the step of:
multiplexing information indicative of a radio resource for the one of the shared data channel and the paging channel for transmitting the paging information into an L1/L2 control channel.

44. The communication method as claimed in claim 42, further comprising the step of:
multiplexing information indicative of a radio resource of the one of the shared data channel and the paging channel for transmitting paging information into a broadcast channel.

45. The communication method as claimed in claim 42, wherein the step of multiplexing comprises transmitting at a same center frequency as a synchronization channel.

46. The communication method as claimed in claim 45, wherein the center frequency is equal to a center frequency of a system bandwidth.

47. The communication method as claimed in claim 42, wherein the step of multiplexing comprises multiplexing the one of the shared data channel and the paging channel for transmitting paging information into one radio resource block or a portion thereof.

48. The communication method as claimed in claim 42, wherein the step of multiplexing comprises multiplexing the one of the paging indicator channel and the L1/L2 control channel into radio resource blocks different from each other.

49. The communication method as claimed in claim 36, further comprising the step of:
applying transmit diversity to a shared data channel, a paging indicator channel and a paging channel.

50. The communication method as claimed in claim 35, further comprising the step of:
applying at least one of time diversity and frequency diversity to a shared data channel.

51. The communication method as claimed in claim 42, further comprising the step of:
using a common spread code and transmission timing over sectors for the one of the shared data channel and the paging channel, the paging information being multiplexed into the shared data channel or the paging channel.
